# EUROPEAN PATENT SPECIFICATION

(11) **EP 0 914 402 B1**
(45) Date of publication and mention of the grant of the patent: **05.09.2001**
(21) Application number: 97923087.7
(22) Date of filing: 07.05.1997
(51) Int. Cl.: C10G 11/18, B04C 5/18, B01J 8/00

(54) **APPARATUS AND METHOD FOR THE SEPARATION AND STRIPPING OF FLUID CATALYST CRACKING PARTICLES FROM GASEOUS HYDROCARBONS**
VORRICHTUNG UND VERFAHREN ZUR TRENNUNG UND ABSTREIFEN VON WIRBELSCHICHTSPALTUNGSKATALYSATORTEILCHEN VON GASFÖRMIGEN KOHLENWASSERSTOFFEN
APPAREIL ET PROCEDE PERMETTANT DE SEPARER ET DE RECTIFIER LESDITES PARTICULES D'HYDROCARBURES GAZEUX LES PARTICULES DE CRAQUAGE D'UN CATALYSEUR FLUIDE

(30) Priority: 08.05.1996 US 646607
(43) Date of publication of application: 12.05.1999
(73) Proprietor: SHELL INTERNATIONALE RESEARCH MAATSCHAPPIJ B.V., 2596 HR Den Haag (NL)
(72) Inventor: DEWITZ, Thomas, Shawn, Houston, TX 77077 (US)
(86) International application number: PCT/EP97/02499
(87) International publication number: WO 97/42275

(56) References cited:
- EP-A- 0 103 713
- EP-A- 0 139 390
- GB-A- 2 159 442
- GB-A- 2 208 298
- US-A- 4 797 038
- US-A- 5 248 408

## Description

This invention relates to an apparatus for the separation of solid particles from gaseous hydrocarbons and stripping of hydrocarbons from the separated solid particles. In yet another aspect, it relates to an improved method for separating solid particles, such as catalyst, from gaseous hydrocarbons and stripping hydrocarbons from the separated particles.

Apparatus for separating solid particles from gaseous hydrocarbons have been available for years and have found commercial use, for instance in the separation of hydrocarbon cracking catalysts from gaseous products in a fluidized catalytic cracking process.

In a process which uses solid particles, it is common for suspensions and other mixtures of fine particles to be entrained in a gaseous stream. Many times, the suspensions contain fine solid particles which contain adsorbed and/or entrained residue of the substance(s) involved in the reaction. It becomes necessary to both separate and recover the fine particles from the gaseous stream and to strip the residue from the fine particles in order to prevent possibly detrimental or undesirable reactions downstream. For example, in a typical catalytic cracking process, hydrocarbons are reacted in the presence of catalyst in a riser reactor. Hydrocarbon gases are formed which carry fine solid particles of the catalyst along as the gases flow downstream of the reactor. The suspended catalytic particles contained adsorbed and/or entrained hydrocarbons. The catalytic particles must be separated from the gases and stripped of the hydrocarbons to prevent catalytic reactions in zones where this is undesirable (commonly called "over cracking"). Stripping also increases yield and allows the catalyst to be recycled. While the apparatus and process of the present invention will be described with particular emphasis on catalytic cracking of hydrocarbons, it is to be understood that it is not so limited and that the apparatus and processes will function as well for other systems which use solid particles and generate mixtures of the solid particles in vapour flow.

As new, highly reactive cracking catalysts, such as zeolites, came into common usage, new separation apparatus were developed to rapidly separate the reactive cracking catalyst from the cracked hydrocarbon vapour in order to avoid over cracking once the hydrocarbons exit a reactor.

USA patent specifications No. 4 961 863 and No. 5 259 855 describe a twin-drum separator which may be located at the terminal end of a catalytic cracking riser reactor. An advantage of the twin-drum separator is that it does not easily choke from catalyst carryover. Most catalytic cracking processes require a high separation efficiency in order to reduce the catalyst carried outside of the reactor vessels, and the twin-drum separator may then not be that suitable to be used alone. The twin-drum separator also does not integrate well with an internal stripper bed because the upflow of vapour from the stripper catalyst bed could disrupt the vertical flow within the twin-drum separator.

USA patent specifications No. 4 693 808 and No. 4 731 228 describe a horizontal cyclone separator. The mass ratio of catalyst to gas in a horizontal separator limits the maximum amount of catalyst the separator can carry, and if the mass ratio of catalyst to gas is too high, the horizontal cyclone separator tends to choke.

USA patent specification No. 4 692 311 describes a so-called "quick disengaging cyclone" to reduce separating and stripping time. The cyclone works on centrifugal separation and a reverse flow vortex of vapour. A vortex stabilizer is used to terminate the vortex before it reaches the bottom of the cyclone, where, if not terminated, the vortex can pick-up separated catalyst at the bottom of the cyclone and carry the catalyst back up and out through the cyclone outlet. The quick disengaging cyclone has proven to work at high efficiency; however, the unit is fairly large due to the need for an internal catalyst stripping bed and a standpipe extending from the bottom of the cyclone.

In addition to catalytic crackers, apparatus for separation and stripping are also used in fluid cokers, entrained coal gasifiers, and other industrial processes using fast-fluidized solid particles. These units may be retrofitted to achieve higher separation and stripping efficiencies in order to meet environmental and economic needs. While separator designs such as those just described have been used for retrofitting various fast-fluidized processes, their use can be limiting for retrofitting units which have limited space for placement of separators and strippers and/or which need to be retrofitted in order to increase efficiency.

In many catalytic cracking plants, for example, a riser reactor exhausts into a disengager vessel where undesirable post-riser cracking takes place. Most of these disengager vessels have a fluidized catalyst bed in the bottom and some sort of separation means at the top. These disengager vessels are often too small to be retrofitted internally with a separator and stripper such those just described. Moreover, it is expensive and inefficient to disassemble working catalytic crackers in order to install improved separators. So it has not always been possible, or desirable, to place higher-efficiency separators and strippers, such as those just described, into existing disengager vessels. It is very desirable to provide a separator and stripper technology which has high efficiency, smaller size, and simpler design.

It is an object of this invention to provide an integrated disengager and stripper which has a high separation efficiency.

It is another object of this invention to provide a retrofit integrated disengager and stripper which can fit into existing catalytic cracker disengager vessels.

It is yet another object of this invention to provide a retrofit integrated disengager and stripper which is less expensive to manufacture.

To this end the integrated disengager and stripper for separating solid particles suspended in vapour and for stripping adsorbed and entrained residue from the solid particles according to the present invention comprises:
(a) a disengager vessel having a primary fluidized-bed zone adapted to contain fluidized solid particles, and a primary means for injecting into the primary fluidized-bed zone a gas for fluidizing or stripping solid particles;
(b) a vertical primary cyclone contained inside the disengager vessel, which primary cyclone has a cylindrical side wall and is closed at its upper end by means of a cover provided with an outlet opening and open at its lower end, which primary cyclone is further provided with at least one inlet for receiving a suspension of solid particles and vapour; and
(c) a first outlet conduit for providing a flow path from the outlet opening of the primary cyclone, which has an end connected to the outlet opening of the primary cyclone, wherein the open lower end of the primary cyclone projects downwardly into the primary fluidized-bed zone so as to form a secondary fluidized-bed zone within the lower open end of the primary cyclone.

The invention further relates to a method for separating a mixture of solid particles and vapour and for stripping adsorbed and entrained residue from separated solid particles in a disengager vessel having a primary fluidized bed, which method according to the invention comprises:
(a) flowing a mixture of solid particles and vapour through a transport conduit;
(b) passing the mixture of solid particles and vapour from the transport conduit into a vertical primary cyclone having an open lower end contained inside the disengager vessel, wherein the open lower end of the primary cyclone is submerged in the primary fluidized bed;
(c) controlling the level of the primary fluidized bed so that the top surface of the primary fluidized bed is maintained above the open lower end of the primary cyclone, and that a portion of the primary fluidized bed is contained within the primary cyclone at the open lower end, forming a secondary fluidized bed;
(d) separating the mixture of solid particles and vapour into separated vapour and separated solid particles containing adsorbed or entrained residue;
(e) collecting the separated solid particles in the secondary fluidized bed contained within the primary cyclone;
(f) introducing a gas to strip the residue from the separated solid particles, forming stripped vapours and stripped solid particles;
(g) allowing the separated vapour and stripped vapour to pass upwards through the primary cyclone; and
(h) allowing stripped solid particles to flow away from the open lower end of the primary cyclone into the primary fluidized bed.

The invention will now be described by way of example with reference to the drawings, wherein
Figure 1 shows a cross-sectional view of the integrated disengager and stripper according to the present invention;
Figure 2 shows a cross-sectional view of the primary cyclone of Figure 1 drawn to a scale larger than that of Figure 1; and
Figure 3 shows a cross-sectional view of the secondary cyclone of Figure 1 drawn to a scale larger than that of Figure 1.

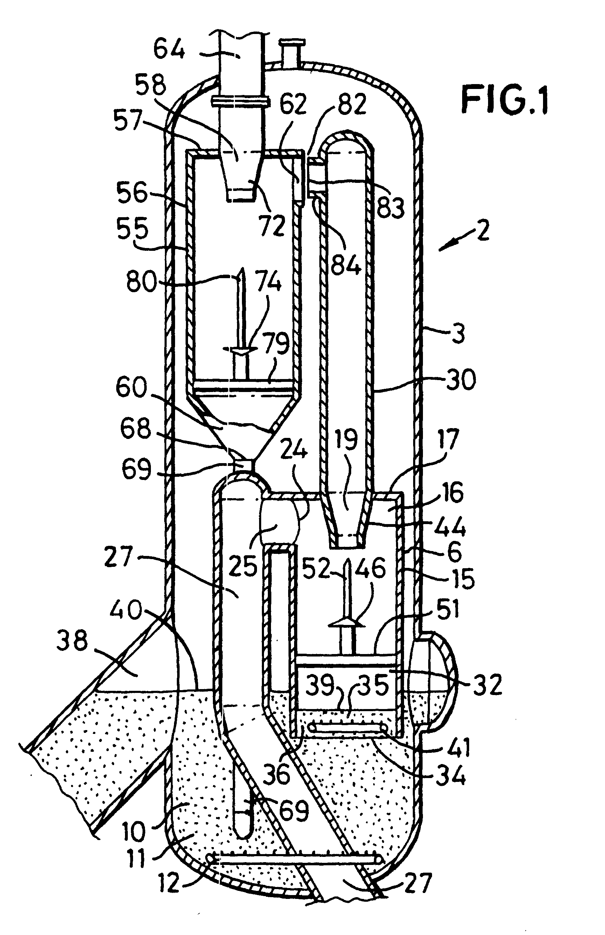

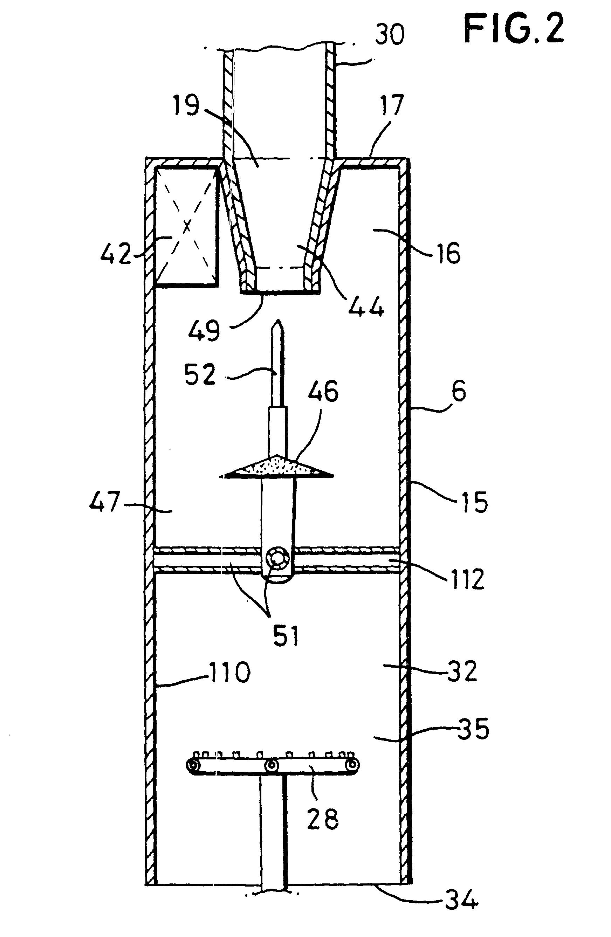

Reference is now made to Figures 1 and 2. The integrated disengager and stripper 2 for separating solid particles suspended in vapour and for stripping adsorbed and entrained residue from the solid particles according to the present invention comprises a disengager vessel 3 and a vertical primary cyclone 6 which is contained inside the disengager vessel 3.

The disengager vessel 3 has a primary fluidized-bed zone 10 adapted to contain a primary fluidized bed 11 of fluidized solid particles, and a primary means for injecting into the primary fluidized-bed zone a gas for fluidizing or stripping solid particles in the form of primary injector 12.

The vertical primary cyclone 6 has a cylindrical wall in the form of circle-cylindrical side wall 15 and is closed at its upper end 16 by means of a cover 17 provided with an outlet opening 19.

The primary cyclone 6 is further provided with at least one inlet 24 for receiving a suspension of solid particles and vapour. The inlet 24 of the primary cyclone is directly connected to an outlet conduit 25 of a transport conduit in the form of a reactor riser 27 extending into the disengager vessel 3.

The integrated disengager and stripper 2 also comprises a first outlet conduit 30 for providing a flow path from the outlet opening 19 of the primary cyclone 6, which has an end that is connected to the outlet opening 19 of the primary cyclone 6.

The vertical primary cyclone 6 is closed at its upper end 16, however, it is open at its lower end 32 having a discharge opening 34, wherein the inner diameter of the open lower end 32 is substantially equal to that of the upper end 16 of the primary cyclone 6. The open lower end 32 of the vertical primary cyclone 6 projects downwardly into the primary fluidized-bed zone 10 so as to form a secondary fluidized-bed zone 35 adapted to contain during normal operation a secondary fluidized bed 36 of fluidized solid particles within the lower end 32 of the primary cyclone 6.

During normal operation, a mixture of solid particles in the form of catalyst particles and vapour in the form of reaction effluent from a catalytic cracking process flows upwards through the reactor riser 27, and passes through its outlet conduit 25 into the inlet 24 of the primary cyclone 6.

In the primary cyclone 6 the catalyst particles are separated from the reaction effluent; the catalyst particles fall downwards towards the lower end 32 of the primary cyclone 6, and the reaction effluent passes upwards and leaves the primary cyclone 6 through the first outlet conduit 30.

The lower part of the disengager vessel 3 contains the primary fluidized bed 11 of catalyst particles which are maintained in a fluidized state by the action of gas for fluidizing solid particles injected into the primary fluidized-bed zone 10 through the primary injector 12. The gas also strips the catalyst particles and in this way adsorbed or entrained residue are removed therefrom to obtain stripped catalyst particles which are discharged from the disengager vessel 3 through discharge conduit 38. The catalyst particles are passed to a regenerator (not shown) where they are regenerated so that they can be used in the reactor riser 27.

Since the open lower end 32 of the primary cyclone 6 projects downwardly into the primary fluidized-bed zone 10, the discharge opening 34 is submerged in the primary fluidized bed 11, and the level of the primary fluidized bed 11 is controlled so that the top surface 39 of the primary fluidized bed 11 is maintained above the discharge opening 34 of the primary cyclone 3. The portion of the primary fluidized bed 11 contained within the lower end 32 of the primary cyclone 6 forms the secondary fluidized bed 36.

The separated catalyst particles which fall downwardly through the primary cyclone 6 are collected in the secondary fluidized bed 36.

Gas introduced through the primary injector 12 also enters into the secondary fluidized bed 36 to strip the residue from the separated catalyst particles, forming stripped vapour and stripped catalyst particles. The stripped vapour and removed reaction effluent pass upwards through the primary cyclone 6, and are removed through the first outlet conduit 30. Whereas stripped catalyst particles are allowed to flow away from the discharge opening 34 of the primary cyclone 6 into the primary fluidized bed 11.

The fluidized catalyst particles are thus partially contained in the secondary fluidized bed 36 inside the open lower end 32 of the primary cyclone 6. This secondary fluidized bed 36 acts as a quick-stripper fluidized stripper bed inside the primary cyclone 6 while the primary fluidized bed 11 acts as a main-stripper fluidized stripper bed inside the disengager vessel 3. Therefore the fluidized-bed zones are sometimes also called stripper zones.

Suitably the primary cyclone 6 is operated at a slightly higher pressure than that in the disengager vessel 3, so that the top surface 39 of the secondary fluidized bed 36 is below the top surface 40 of the primary fluidized bed 11.

A conventional primary cyclone is normally closed at its lower end, and provided with a dip-leg to release separated solid particles, such as catalyst, which builds up in the bottom of the primary cyclone. In order to develop sufficient head to overcome the cyclone inlet and outlet pressure drop and thus to allow the separated solid particles to discharge to a fluidized bed, there usually must be a relatively long dip-leg. Thus, the entire apparatus requires substantial space to accommodate the length. However, the primary cyclone according to the present invention does not require a dip-leg and thus can be made to fit into a disengager vessel with limited space. The known system also experience problems during start-up when slugs of catalyst particles flow up the transport conduit with the mixture of vapour and catalyst particles. The excess particles fall into the primary cyclone and fill it. To solve this problem, many operators do not place any catalyst into the primary cyclone or in the disengager vessel at start-up. Of course, this decreases both yield and efficiency until the catalyst level is adequate to accommodate the necessary stripping step. In the present invention, any slugs formed during start-up fall into the open-ended primary cyclone, and they are fluidized away from the open lower end 32 and distributed in the primary fluidized bed in the disengager vessel, eliminating unwanted build-up in the primary cyclone.

Suitably, the integrated disengager and stripper further comprises secondary means for injecting into the secondary fluidized-bed zone 35 a gas for fluidizing or stripping solid particles in the secondary fluidized bed 36 in the form of secondary injector 41.

The inlet 24 of the primary cyclone 6 is suitably a tangential inlet 42 (see Figure 2) arranged in the circle-cylindrical side wall 15 near the closed end of the primary cyclone 6. The mixture of mixture of solid particles in the form of catalyst particles and vapour in the form of reaction effluent from a catalytic cracking process entering through the tangential inlet 42 of the primary cyclone 6, is caused to form a vortex in the upper end 16 of the primary cyclone 6. The upper end 16 is then the swirl zone of the primary cyclone 6.

The efficiency of the swirl zone can be improved when part 44 of the first outlet conduit 30 extends into the primary cyclone 6. Part 44 forms the vortex outlet of the primary cyclone 6.

Suitably the primary cyclone 6 further comprises a primary dish-shaped vortex stabilizer 46 coaxially mounted in the middle part 47 of the primary cyclone 6. The outer diameter of the primary vortex stabilizer 46 is equal to or larger than the diameter of the first outlet conduit 30, and smaller than the inner diameter of the circle-cylindrical side wall 15.

The primary vortex stabilizer 46 is positioned below the inlet opening 49 of the first outlet conduit 30, and suitably at a distance which is equal to or larger than the diameter of the first outlet conduit 30. In the embodiment of the invention as shown in Figure 1 and 2, the first outlet conduit has a tapered part 44, and the diameter is the smallest diameter of the tapered part 44.

When a vortex stabilizer is used, the depth to which the discharge opening 34 of the primary cyclone 6 is submerged in the primary fluidized bed 11 is dependent upon the elevation of the vortex stabilizer. In particular, the depth of the secondary fluidized bed 36 should not be larger than the distance from the discharge opening 34 of the primary cyclone 6 to the bottom of the primary vortex stabilizer 46. In the embodiment which uses a vortex stabilizer such as that shown in Figures 1 and 2, the maximum depth of the secondary fluidized bed 36 would be from the discharge opening 34 of the primary cyclone 6 to the bottom most surface of the primary vortex stabilizer 46.

The primary vortex stabilizer 46 is supported by means of supports 51. It is suitably provided with a vortex finder 52.

The annular space between the outer surface of the primary vortex stabilizer 46 and the inner surface of the cylindrical side wall 15 allows separated particles to pass downward through the annular space into the secondary fluidized-bed zone 35. The annular space also allows stripping gas from the fluidized-bed zone to pass upward through the annular space into the cyclone zone above the primary vortex stabilizer 46. The secondary fluidized-bed zone 35 defines a stripping zone in gaseous communication with the cyclone zone in the upper end 16 through the annular space. In the fluidized-bed zone, adsorbed and/or entrained residue is stripped from the particles to thereby recover the residue and to reduce undesired reactions of the residue. For example, in a suspension of fine catalyst particles and hydrocarbon vapours, the hydrocarbon vapours are first separated from the catalyst particles in the cyclone zone. Then the adsorbed and entrained hydrocarbon on the catalyst is stripped from the catalyst in the fluidized-bed zone, recovering the hydrocarbon as hydrocarbon vapour and reducing undesired over cracking reactions.

In a suitable embodiment, the integrated disengager and stripper 2 according to the present invention further comprises a secondary cyclone 55 contained within the disengager vessel 3, having a cylindrical side wall in the form of circle-cylindrical side wall 56. The secondary cyclone 55 is closed at its upper end by means of a cover 57 provided with an outlet opening 58. It comprises a lower portion 60 and an inlet 62 which is in fluid communication with the first outlet conduit 30. The integrated disengager and stripper 2 also includes a second outlet conduit 64 providing a flow path from the outlet opening 58 of the secondary cyclone 55.

During normal operation, separated vapour and stripped vapour are removed from the primary cyclone 6 through the first outlet conduit 30. This vapour still contains entrained catalyst particles which have to be removed in the secondary cyclone 55. To this end the vapour is introduced into the secondary cyclone 55, entrained catalyst particles are separated from the vapour. The vapour is flows upwards in the secondary cyclone 55 through the outlet opening 58, and the catalyst particles are collected in the lower portion 60 of the secondary cyclone 55. Vapour and catalyst particles are discharged separately from the secondary cyclone 55, through the second outlet conduit 64 and an outlet opening 68 in the lower portion 60, respectively. The secondary cyclone 55 is operated at a pressure which is slightly below that in the primary cyclone 6, and since that pressure is below that in the disengager vessel 3, the pressure in the secondary cyclone 55 is lower than that in the disengager vessel 3.

The secondary cyclone 55 is suitably provided with a dip-leg 69. The dip-leg 69, which is preferably provided with a valve (not shown) at the bottom to allow release of separated particles, extends into the primary fluidized bed 11.

The secondary cyclone 55 is placed in series with the primary cyclone 6, which is called in the art "close-coupling". The term "close-coupled" is commonly used when the exhaust of one cyclone is coupled to the inlet of another cyclone. Close-coupling cyclones reduces the undesirable, post-riser cracking of riser reactor products which can take place when, for example, (1) all separation is performed in the disengager vessel, or (2) the first cyclone exhausts into the disengager vessel.

When both a primary cyclone with vortex stabilizer means and a secondary cyclone with vortex stabilizer means are used in series, the primary cyclone acts as a "quick disengaging cyclone" and the secondary cyclone acts as a "high efficiency cyclone."

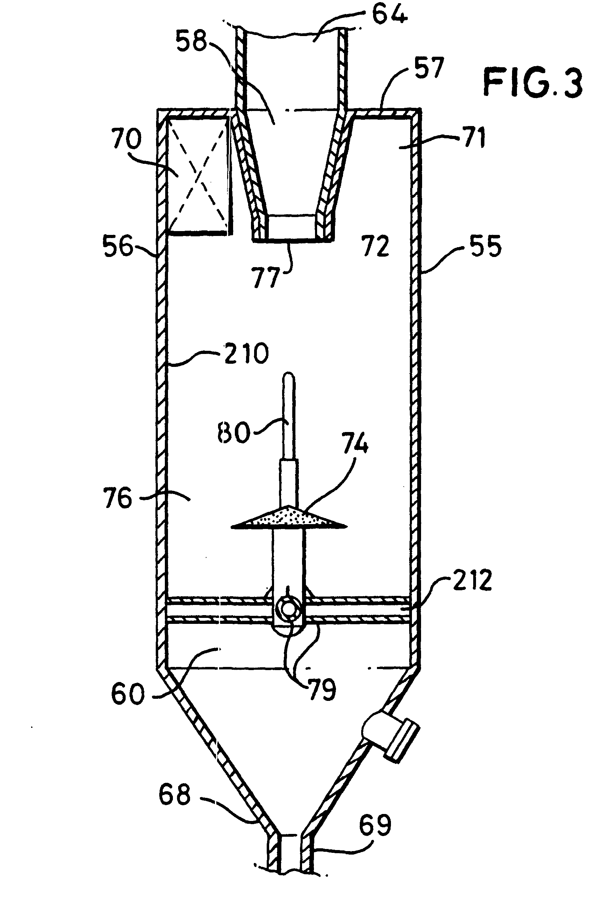

Suitably the inlet 62 of the secondary cyclone 55 is a tangential inlet 70 (see Figure 3) arranged in the upper end 71 of the secondary cyclone 55. Vapour and catalyst particles entering through the tangential inlet 70 of the secondary cyclone 55, are caused to form a vortex in the upper end 71 of the secondary cyclone 55. The upper end 71 is then the swirl zone of the secondary cyclone 55.

The efficiency of the swirl zone can be improved when part 72 of the second outlet conduit 64 extends into the secondary cyclone 55. Part 72 forms the vortex outlet of the secondary cyclone 55.

Suitably the secondary cyclone 55 further comprises a secondary dish-shaped vortex stabilizer 74 coaxially mounted in the middle part 76 of the secondary cyclone 55. The outer diameter of the secondary vortex stabilizer 74 is equal to or larger than the diameter of the second outlet conduit 64, and smaller than the inner diameter of the circle-cylindrical side wall 56. The secondary vortex stabilizer 74 is positioned below the inlet opening 77 of the second outlet conduit 64 at a distance which is equal to or larger than the diameter of the second outlet conduit 64. In the embodiment of the invention as shown in Figure 1 and 3, the second outlet conduit 64 has a tapered part 72, and the diameter is the smallest diameter of the tapered part 72.

The secondary vortex stabilizer 74 is supported by means of supports 79. It is suitably provided with a vortex finder 80.

Any means for compensating for thermal and vibrational movement between the primary and secondary cyclones 6 and 55 may be used in the connection between them. In the embodiment of Figure 1, there is provided a gap 82, between the outlet 83 of the first outlet conduit 30 and the inlet 62 of the secondary cyclone 55. The gap 82 further provides a means for stripper gas and stripped vapour in the disengager vessel 3 to enter the slightly lower pressure secondary cyclone 55.

Suitably the integrated disengager and stripper according to the present invention further comprising a venturi (not shown) positioned in the outlet end 84 of the first outlet conduit 30 in the vicinity of the inlet 62 of the secondary cyclone 55. The venturi not only helps move the gases in the first outlet conduit 30 into the secondary cyclone 55, it also reduces the pressure differential between the interior of the disengager vessel 3 and the secondary cyclone 55.

Suitably the inner surfaces of the circle-cylindrical side walls 15 and 56 of the primary and secondary cyclones 6 and 55 a.re lined with a refractory which is resistant to erosion, such as ceramic. This allows the shell of the disengager vessel 3 to be used without a refractory lining since the cyclones are lined. The lining is not needed in the disengager vessel 3 because the solid particles will not be flowing in the disengager vessel 3 in a manner which would erode the walls. Eliminating the lining in the disengager vessel 3 reduces the occurrence of two problems commonly seen. First, corrosion caused by uneven heating of the disengager vessel walls should be reduced. Second, the refractory lining in the disengager vessel 3 will spall over time. The spalled lining enters the system, where it will plug valves and equipment. Eliminating the refractory lining of the disengager vessel 3 should substantially reduce this problem.

The combination of the primary and secondary cyclones 6 and 55 can suitably be used as a retrofit for fluid catalytic crackers, fluid cokers, entrained coal gasifiers, and other industrial processes with small disengager vessels or small internal cyclones.

## Claims

1. Integrated disengager and stripper (2) for separating solid particles suspended in vapour and for stripping adsorbed and entrained residue from the solid particles comprising:
(a) a disengager vessel (3) having a primary fluidized-bed zone (10) adapted to contain fluidized solid particles, and a primary means (12) for injecting into the primary fluidized-bed zone (10) a gas for fluidizing or stripping solid particles;
(b) a vertical primary cyclone (6) contained inside the disengager vessel (3), which primary cyclone (6) has a cylindrical side wall (15) and is closed at its upper end by means of a cover (17) provided with an outlet opening, (19) and open at its lower end, which primary cyclone (6) is further provided with at least one inlet (24) for receiving a suspension of solid particles and vapour; and
(c) a first outlet conduit (30) for providing a flow path from the outlet opening (19) of the primary cyclone, which has an end connected to the outlet opening (19) of the primary cyclone (6),
**characterized in that** the open lower end of the primary cyclone (6) projects downwardly into the primary fluidized-bed zone (10) so as to form a secondary fluidized-bed zone (35) within the lower open end (32) of the primary cyclone (6).

2. Integrated disengager and stripper (2) as claimed in claim 1, further comprising secondary means (41) for injecting into the secondary fluidized-bed zone (35) a gas for fluidizing or stripping solid particles.

3. Integrated disengager and stripper (2) as claimed in claim 1 or 2, **characterized in that** the inlet (24) of the primary cyclone (6) is a tangential inlet (42) arranged in the side wall (15) near the closed end of the primary cyclone (6).

4. Integrated disengager and stripper (2) as claimed in any one of the claims 1-3, **characterized in that** part (44) of the first outlet conduit (30) extends into the primary cyclone (6).

5. Integrated disengager and stripper (2) as claimed in any one of the claims 1-4, **characterized in that** the primary cyclone (6) further comprises a primary vortex stabilizer (46) coaxially mounted in the middle part of the primary cyclone (6), the outer diameter of the primary vortex stabilizer (46) being equal to or larger than the diameter of the first outlet conduit (30), which primary vortex stabilizer (46) is positioned below the inlet opening (49) of the first outlet conduit (30) at a distance which is equal to or larger than the diameter of the first outlet conduit (30).

6. Integrated disengager and stripper (2) as claimed in any one of the claims 1-5, further comprising:
(a) a secondary cyclone (55) contained within the disengager vessel (3), which secondary cyclone (55) is closed at its upper end by means of a cover (57) provided with an outlet opening (58) and comprises a lower portion (60) and an inlet (62) which is in fluid communication with the first outlet conduit (30); and
(b) a second outlet conduit (64) providing a flow path from the outlet opening (58) of the secondary cyclone (55).

7. Integrated disengager and stripper (2) as claimed in claim 6, **characterized in that** the inlet (62) of the secondary cyclone (55) is a tangential inlet (70) arranged in the upper portion (71) of the secondary cyclone (55).

8. Integrated disengager and stripper (2) as claimed in claim 6 or 7, **characterized in that** part of the second outlet conduit (64) extends into the secondary cyclone (55).

9. Integrated disengager and stripper (2) as claimed in any one of the claims 6-8, **characterized in that** the secondary cyclone (55) further comprises a secondary vortex stabilizer (74) coaxially mounted in the middle part of the secondary cyclone (55), the outer diameter of the secondary vortex stabilizer (74) being equal to or larger than the diameter of the second outlet conduit (64), which secondary vortex stabilizer (74) is positioned below the inlet opening (77) of the second outlet conduit (64) at a distance which is equal to or larger than the diameter of the second outlet conduit (64).

10. Integrated disengager and stripper (2) as claimed in any one of the claims 6-9, further comprising a venturi positioned in the outlet end (84) of the first outlet conduit (30) in the vicinity of the inlet (62) of the secondary cyclone (55).

11. Integrated disengager and stripper as claimed in any one of the claims 6-10, **characterized in that** there is a gap (82) between the outlet end (83) of the first outlet conduit (30) and the inlet (62) of the secondary cyclone (55).

12. Method for separating a mixture of solid particles and vapour and for stripping adsorbed and entrained residue from separated solid particles in a disengager vessel (3) having a primary fluidized bed (10) comprising:
(a) flowing a mixture of solid particles and vapour through a transport conduit (27);
(b) passing the mixture of solid particles and vapour from the transport conduit (27) into a vertical primary cyclone (6) having an open lower end contained inside the disengager vessel (3), wherein the open lower end of the primary cyclone (6) is submerged in the primary fluidized bed (10),
(c) controlling the level of the primary fluidized bed so that the top surface of the primary fluidized bed is maintained above the open lower end of the primary cyclone, and that a portion of the primary fluidized bed is contained within the primary cyclone at the open lower end, forming a secondary fluidized bed (36);
(d) separating the mixture of solid particles and vapour into separated vapour and separated solid particles containing adsorbed or entrained residue;
(e) collecting the separated solid particles in the secondary fluidized bed (36) contained within the primary cyclone (6);
(f) introducing a gas to strip the residue from the separated solid particles, forming stripped vapours and stripped solid particles;
(g) allowing the separated vapour and stripped vapour to pass upwards through the primary cyclone (6); and
(h) allowing stripped solid particles to flow away from the open lower end of the primary cyclone (6) into the primary fluidized bed (10).

13. The method as claimed in claim 12, further comprising operating the primary cyclone (6) at a slightly higher pressure than that in the disengager vessel (3), so that the top surface (39) of the secondary fluidized bed (36) is below the top surface (40) of the primary fluidized bed (10).

14. The method as claimed in claim 12 or 13, further comprising removing the separated vapour and stripped vapour to pass upwards from the primary cyclone (6), introducing the vapour into a secondary cyclone (55), separating entrained solid particles in the secondary cyclone (55) and discharging the vapour and the solid particles separately from the secondary cyclone (55).

15. The method as claimed in any one of the claims 12-14,
**characterized in that** the secondary cyclone (55) is operated at a pressure which is slightly below that in the primary cyclone (6).

16. Method for retrofitting an existing disengager vessel (3) having some sort of separation means at the top and a fluidized-bed zone at the bottom, hereinafter referred to as the primary fluidized-bed zone (10), adapted to contain fluidized solid particles, and a primary means (12) for injecting into the primary fluidized-bed zone (10) a gas for fluidizing or stripping solid particles, **characterized in that** the retrofitting is performed by placing a vertical primary cyclone (6) inside the disengager vessel (3), which primary cyclone (6) has a cylindrical side wall (15) and is closed at its upper end by means of a cover (17) provided with an outlet opening (19) and open at its lower end, which primary cyclone (6) is further provided with at least one inlet (24) for receiving a suspension of solid particles and vapour; and a first outlet conduit (30) for providing a flow path from the outlet opening (19) of the primary cyclone, which has an end connected to the outlet opening (19) of the primary cyclone (6), wherein the open lower end of the primary cyclone (6) projects downwardly into the primary fluidized-bed zone (10) so as to form a secondary fluidized-bed zone (35) within the lower open end (32) of the primary cyclone (6).

17. Method for retrofitting as claimed in claim 16,
**characterized in that** secondary means (41) for injecting into the secondary fluidized-bed zone (35) a gas for fluidizing or stripping solid particles are present.

18. Method for retrofitting as claimed in claim 16 or 17,
**characterized in that** the inlet (24) of the primary cyclone (6) is a tangential inlet (42) arranged in the side wall (15) near the closed end of the primary cyclone (6).

19. Method for retrofitting as claimed in any one of the claims 16-18, **characterized in that** part (44) of the first outlet conduit (30) extends into the primary cyclone (6).

20. Method for retrofitting as claimed in any one of the claims 16-19, **characterized in that** the primary cyclone (6) further comprises a primary vortex stabilizer (46) coaxially mounted in the middle part of the primary cyclone (6), the outer diameter of the primary vortex stabilizer (46) being equal to or larger than the diameter of the first outlet conduit (30), which primary vortex stabilizer (46) is positioned below the inlet opening (49) of the first outlet conduit (30) at a distance which is equal to or larger than the diameter of the first outlet conduit (30).

21. Method for retrofitting as claimed in any one of the claims 16-20, **characterized in that**
(a) a secondary cyclone (55) is contained within the resulting disengager vessel (3), which secondary cyclone (55) is closed at its upper end by means of a cover (57) provided with an outlet opening (58) and comprises a lower portion (60) and an inlet (62) which is in fluid communication with the first outlet conduit (30); and
(b) a second outlet conduit (64) providing a flow path from the outlet opening (58) of the secondary cyclone (55).

22. Method for retrofitting as claimed in claim 21,
**characterized in that** the inlet (62) of the secondary cyclone (55) is a tangential inlet (70) arranged in the upper portion (71) of the secondary cyclone (55).

23. Method for retrofitting as claimed in claim 21 or 22,
**characterized in that** part of the second outlet conduit (64) extends into the secondary cyclone (55).

24. Method for retrofitting as claimed in any one of the claims 21-23, **characterized in that** the secondary cyclone (55) further comprises a secondary vortex stabilizer (74) coaxially mounted in the middle part of the secondary cyclone (55), the outer diameter of the secondary vortex stabilizer (74) being equal to or larger than the diameter of the second outlet conduit (64), which secondary vortex stabilizer (74) is positioned below the inlet opening (77) of the second outlet conduit (64) at a distance which is equal to or larger than the diameter of the second outlet conduit (64).

25. Method for retrofitting as claimed in any one of the claims 21-24, further comprising a venturi positioned in the outlet end (84) of the first outlet conduit (30) in the vicinity of the inlet (62) of the secondary cyclone (55).

26. Method for retrofitting as claimed in any one of the claims 21-25, **characterized in that** there is a gap (82) between the outlet end (83) of the first outlet conduit (30) and the inlet (62) of the secondary cyclone (55).

27. Method for retrofitting as claimed in any one of the claims 16-26, **characterized in that** the disengager vessel is used in a fluid catalytic catalyst cracker, a fluid coker or an entrained coal gasifier process.

## Patentansprüche

1. Integrierte Abtrenn- und Strippvorrichtung (2) zum Abtrennen von in Dampf suspendierten festen Partikeln und zum Strippen des adsorbierten und mitgerissenen Rückstandes von den festen Partikeln, umfassend:
(a) ein Abtrenngefäß (3) mit einer primären Wirbelbettzone (10), die zur Aufnahme fluidisierter fester Partikel ausgebildet ist, und primären Mitteln (12) zum Einsprühen eines Gases zum Fluidisieren oder Strippen der festen Partikel in die primäre Wirbelbettzone (10);
(b) einen vertikalen primären Zyklon (6), der im Inneren des Abtrenngefäßes (3) enthalten ist, welcher primäre Zyklon (6) eine zylindrische Seitenwand (15) besitzt und an seinem oberen Ende durch eine mit einer Auslaßöffnung (19) versehene Abdeckung (17) verschlossen ist und an seinem unteren Ende offen ist, welcher primäre Zyklon (6) ferner mit zumindest einem Einlaß (24) zum Empfang einer Suspension von festen Partikeln und Dampf ausgestattet ist; und
(c) eine erste Auslaßleitung (30) zum Zurverfügungstellen eines Strömungspfades von der Auslaßöffnung (19) des primären Zyklons, deren eines Ende an die Auslaßöffnung (19) des primären Zyklons (6) angeschlossen ist,
**dadurch gekennzeichnet**, daß das offene untere Ende des primären Zyklons (6) nach unten in die primäre Wirbelbettzone (10) vorragt, um eine sekundäre Wirbelbettzone (35) im Inneren des unteren offenen Endes (32) des primären Zyklons (6) zu bilden.

2. Integrierte Abtrenn- und Strippvorrichtung (2) nach Anspruch 1, ferner mit sekundären Mitteln (41) zum Einsprühen eines Gases zum Fluidisieren oder Strippen der festen Partikel in die sekundäre Wirbelbettzone (35).

3. Integrierte Abtrenn- und Strippvorrichtung (2) nach Anspruch 1 oder 2, **dadurch gekennzeichnet**, daß der Einlaß (24) des primären Zyklons (6) ein Tangentialeinlaß (42) ist, der in der Seitenwand (14) nahe dem geschlossenen Ende des primären Zyklons (6) angeordnet ist.

4. Integrierte Abtrenn- und Strippvorrichtung (2) nach einem der Ansprüche 1 bis 3, **dadurch gekennzeichnet**, daß sich ein Teil (44) der ersten Auslaßleitung (30) in den primären Zyklon (6) hineinerstreckt.

5. Integrierte Abtrenn-- und Strippvorrichtung (2) nach einem der Ansprüche 1 bis 4, **dadurch gekennzeichnet**, daß der primäre Zyklon (6) ferner einen primären Wirbelstabilisator (46) aufweist, der koaxial im mittleren Teil des primären Zyklons (6) montiert ist, wobei der Außendurchmesser des primären Wirbelstabilisator (46) gleich oder größer als der Innendurchmesser der ersten Auslaßleitung (30) ist, welcher primäre Wirbelstabilisator (46) unterhalb der Einlaßöffnung (49) der ersten Auslaßleitung (30) in einem Abstand liegt, der gleich oder größer als der Durchmesser der ersten Auslaßleitung (30) ist.

6. Integrierte Abtrenn- und Strippvorrichtung (2) nach einem der Ansprüche 1 bis 5, ferner mit:
(a) einem sekundären Zyklon (55), der im Inneren des Abtrenngefäßes (3) enthalten ist, welcher sekundäre Zyklon (55) an seinem oberen Ende mit Hilfe einer Abdeckung (57) verschlossen ist, die mit einer Auslaßöffnung (58) ausgestatten ist, und einen unteren Abschnitt (60) und einen Einlaß (62) aufweist, der in Fluidverbindung mit der ersten Auslaßleitung (30) ist; und
(b) einer zweiten Auslaßleitung (64), die einen Strömungspfad von der Auslaßöffnung (58) des sekundären Zyklons (55) aus zur Verfügung stellt.

7. Integrierte Abtrenn- und Strippvorrichtung (2) nach Anspruch 6, **dadurch gekennzeichnet**, daß der Einlaß (62) des sekundären Zyklons (55) ein Tangentialeinlaß (70) ist, der im oberen Abschnitt (71) des sekundären Zyklons (55) liegt.

8. Integrierte Abtrenn- und Strippvorrichtung (2) nach Anspruch 6 oder 7, **dadurch gekennzeichnet**, daß ein Teil der zweiten Auslaßleitung (64) sich in den sekundären Zyklon (55) hineinerstreckt.

9. Integrierte Abtrenn- und Strippvorrichtung (2) nach einem der Ansprüche 6 bis 8, **dadurch gekennzeichnet**, daß der sekundäre Zyklon (55) ferner einen sekundären Wirbelstabilisator (74) aufweist, der koaxial im Mittelteil des sekundären Zyklons (55) montiert ist, wobei der Außendurchmesser des sekundären Wirbelstabilisators (74) gleich oder größer als der Durchmesser der zweiten Auslaßleitung (64) ist, welcher sekundäre Wirbelstabilisator (74) unterhalb der Einlaßöffnung (77) der zweiten Auslaßleitung (64) in einem Abstand liegt, der gleich oder größer als der Durchmesser der zweiten Auslaßleitung (64) ist.

10. Integrierte Abtrenn- und Strippvorrichtung (2) nach einem der Ansprüche 6 bis 9, ferner mit einem Venturi, das im Auslaßende (84) der ersten Auslaßleitung (30) in der Nähe des Einlasses (62) des sekundären Zyklons (55) liegt.

11. Integrierte Abtrenn- und Strippvorrichtung nach einem der Ansprüche 6 bis 10, **dadurch gekennzeichnet**, daß ein Spalt (82) zwischen dem Auslaßende (83) der ersten Auslaßleitung (30) und dem Einlaß (62) des sekundären Zyklons (55) ist.

12. Verfahren zum Trennen einer Mischung aus festen Partikeln und Dampf und zum Strippen des adsorbierten und mitgerissenen Rückstandes von den getrennten festen Partikeln in einem Abtrenngefäß (3) mit einem primären Wirbelbett (10), umfassend:
(a) Strömenlassen einer Mischung aus festen Partikeln und Dampf durch eine Förderleitung (27);
(b) Überführen der Mischung aus festen Partikeln und Dampf aus der Förderleitung (27) in einen vertikalen primären Zyklon (6) mit einem offenen unteren Ende, das im Inneren des Abtrenngefäßes (3) enthalten ist, wobei das offene untere Ende des primären Zyklons (6) in das primäre Wirbelbett (10) eintaucht;
(c) Steuern des Pegels des primären Wirbelbetts, sodaß die Oberfläche des primären Wirbelbetts oberhalb des offenen unteren Endes des primären Zyklons gehalten wird und daß ein Teil des primären Wirbelbetts im Inneren des primären Zyklons im Bereich des offenen unteren Endes enthalten ist, wodurch ein sekundäres Wirbelbett (36) gebildet wird;
(d) Trennen der Mischung von festen Partikeln und Dampf in abgetrennten Dampf und abgetrennte feste Partikel, welche adsorbierten und mitgerissenen Rückstand enthalten;
(e) Sammeln der abgetrennten festen Partikel in dem sekundären Wirbelbett (36), das im Inneren des primären Zyklons (6) enthalten ist;
(f) Einbringen eines Gases zum Strippen des Rückstandes von den abgetrennten festen Partikeln, wodurch gestrippte Dämpfe und gestrippte feste Partikel gebildet werden;
(g) Zulassen, daß abgetrennter Dampf und gestrippter Dampf nach oben durch den primären Zyklon (6) hindurchtreten; und
(h) Zulassen, daß gestrippte feste Partikel vom offenen unteren Ende des primären Zyklons (6) in das primäre Wirbelbett (10) abströmen.

13. Verfahren nach Anspruch 12, ferner mit dem Schritt des Betreibens des primären Zyklons (6) mit einem geringfügig höheren Druck als jenem in dem Abtrenngefäß (3), sodaß die Oberfläche (39) des sekundären Wirbelbettes (36) unter der Oberfläche (40) des primären Wirbelbettes (10) liegt.

14. Verfahren nach Anspruch 12 oder 13, ferner umfassend das Entfernen des abgetrennten Dampfes und des gestrippten Dampfes nach oben aus dem primären Zyklons (6), das Einbringen des Dampfes in einen sekundären Zyklon (55), das Abtrennen der mitgerissenen festen Partikeln in dem sekundären Zyklon (55) und das Ausbringen des Dampfes und der festen Partikel getrennt aus dem sekundären Zyklon (55).

15. Verfahren nach einem der Ansprüche 12 bis 14, **dadurch gekennzeichnet**, daß der sekundäre Zyklon (55) bei einem Druck betrieben wird, der geringfügig unter jenem in dem primären Zyklon (6) ist.

16. Verfahren zum Nachrüsten eines bestehenden Abtrenngefäßes (3) mit einer Art von Trennmitteln im oberen Bereich und einer Wirbelbettzone im unteren Bereich, nachstehend als primäre Wirbelbettzone (10) bezeichnet, die zur Aufnahme von fluidisierten festen Partikeln geeignet ist, und primären Mitteln (12) zum Einsprühen eines Gases zum Fluidisieren oder Strippen der festen Partikel in die primäre Wirbelbettzone (10), **dadurch gekennzeichnet**, daß das Nachrüsten durch Anordnen eines vertikalen primären Zyklons (6) im Inneren des Abtrenngefäßes (3) durchgeführt wird, welcher primäre Zyklon (6) eine zylindrische Seitenwand (15) besitzt und an seinem oberen Ende mit Hilfe einer Abdeckung (17) verschlossen ist, die mit einer Auslaßöffnung (19) ausgestattet ist, und an seinem unteren Ende offen ist, welcher primäre Zyklon (6) ferner mit zumindest einem Einlaß (24) zur Aufnahme einer Suspension aus festen Partikeln und Dampf versehen ist; und einer ersten Auslaßleitung (30) zum Zurverfügungstellen eines Strömungspfades von der Auslaßöffnung (19) des primären Zyklons, deren eines Ende an die Auslaßöffnung (19) des primären Zyklons (6) angeschlossen ist, wobei das offene untere Ende des primären Zyklons (6) nach unten in die primäre Wirbelbettzone (10) vorragt, um eine sekundäre Wirbelbettzone (35) im Inneren des unteren offenen Endes (32) des primären Zyklons (6) zu bilden.

17. Verfahren zum Nachrüsten nach Anspruch 16, **dadurch gekennzeichnet**, daß sekundäre Mittel (41) zum Einsprühen eines Gases zum Fluidisieren oder Strippen von festen Partikeln in die sekundäre Wirbelbettzone (35) vorgesehen sind.

18. Verfahren zum Nachrüsten nach Anspruch 16 oder 17, **dadurch gekennzeichnet**, daß der Einlaß (24) des primären Zyklons (6) ein Tangentialeinlaß (42) ist, der in der Seitenwand (15) nahe dem geschlossenen Ende des primären Zyklons (6) angeordnet ist.

19. Verfahren zum Nachrüsten nach einem der Ansprüche 16 bis 18, **dadurch gekennzeichnet**, daß sich ein Teil (44) der ersten Auslaßleitung (30) in den primären Zyklons (6) hineinerstreckt.

20. Verfahren zum Nachrüsten nach einem der Ansprüche 16 bis 19, **dadurch gekennzeichnet**, daß der primäre Zyklon (6) ferner einen primären Wirbelstabilisator (46) aufweist, der koaxial im mittleren Bereich des primären Zyklons (6) montiert ist, wobei der Außendurchmesser des primären Wirbelstabilisators (46) gleich oder größer als der Durchmesser der ersten Auslaßleitung (30) ist, welcher primäre Wirbelstabilisator (46) unterhalb der Einlaßöffnung (49) der ersten Auslaßleitung (30) in einem Abstand liegt, der gleich oder größer als der Durchmesser der ersten Auslaßleitung (30) ist.

21. Verfahren zum Nachrüsten nach einem der Ansprüche 16 bis 20, **dadurch gekennzeichnet**, daß
(a) ein sekundärer Zyklon (55) im Inneren des sich ergebenden Abtrenngefäßes (3) enthalten ist, welcher sekundäre Zyklon (55) an seinem oberen Ende mittels einer Abdeckung (57) verschlossen ist, die mit einer Auslaßöffnung (58) ausgestattet ist, und einen unteren Abschnitt (60) und einen Einlaß (62) aufweist, der in Fluidverbindung mit der ersten Auslaßleitung (30) steht; und
(b) eine zweite Auslaßleitung (64) einen Strömungspfad von der Auslaßöffnung (58) des sekundären Zyklons (55) aus zur Verfügung stellt.

22. Verfahren zum Nachrüsten nach Anspruch 21, **dadurch gekennzeichnet**, daß der Einlaß (62) des sekundären Zyklons (55) ein Tangentialeinlaß (70) ist, der im oberen Bereich (71) des sekundären Zyklons (55) liegt.

23. Verfahren zum Nachrüsten nach Anspruch 21 oder 22, **dadurch gekennzeichnet**, daß sich ein Teil der zweiten Auslaßleitung (64) in den sekundären Zyklon (55) hineinerstreckt.

24. Verfahren zum Nachrüsten nach einem der Ansprüche 21 bis 23, **dadurch gekennzeichnet**, daß der sekundäre Zyklon (55) ferner einen sekundären Wirbelstabilisator (74) aufweist, der koaxial im mittleren Bereich des sekundären Zyklons (55) montiert ist, wobei der Außendurchmesser des sekundären Wirbelstabilisator (74) gleich oder größer als der Durchmesser der zweiten Auslaßleitung (64) ist, welcher sekundäre Wirbelstabilisator (74) unterhalb der Einlaßöffnung (77) der zweiten Auslaßleitung (64) in einem Abstand liegt, der gleich oder größer als der Durchmesser der zweiten Auslaßleitung (64) ist.

25. Verfahren zum Nachrüsten nach einem der Ansprüche 21 bis 24, ferner mit einem Venturi, das im Auslaßende (84) der ersten Auslaßleitung (30) in der Nähe des Einlasses (62) des sekundären Zyklons (55) liegt.

26. Verfahren zum Nachrüsten nach einem der Ansprüche 21 bis 25, **dadurch gekennzeichnet**, daß ein Spalt (82) zwischen dem Auslaßende (83) der ersten Auslaßleitung (30) und dem Einlaß (62) des sekundären Zyklons (55) vorhanden ist.

27. Verfahren zum Nachrüsten nach einem der Ansprüche 16 bis 26, **dadurch gekennzeichnet**, daß das Abtrenngefäß in einer fluidkatalytischen Katalysatorcrackanlage, einer Fließkoksanlage oder einem Mitreiß-Kohlevergaserverfahren verwendet wird.

## Revendications

1. Dispositif de dégagement et extracteur intégré (2)pour la séparation de particules solides en suspension dans de la vapeur et pour l'extraction d'un résidu adsorbé et entraîné des particules solides comprenant :
(a) un récipient de dégagement (3) comportant une zone de lit fluidisé primaire (10) adaptée pour contenir des particules solides fluidisées, et un moyen primaire (12) pour injecter dans la zone de lit fluidisé primaire (10) un gaz pour fluidiser ou extraire des particules solides;
(b) un cyclone primaire vertical (6) contenu à l'intérieur du récipient de dégagement (3), lequel cyclone primaire (6) comporte une paroi latérale cylindrique (15) et est fermé à son extrémité supérieure au moyen d'un couvercle (17) pourvu d'une ouverture de sortie (19) et ouvert à son extrémité inférieure, lequel cyclone primaire (6) est de plus pourvu d'au moins unes entrée (24) pour recevoir une suspension de particules solides et de vapeur; et
(c) un premier conduit de sortie (30) pour former un parcours d'écoulement depuis l'ouverture de sortie (19) du cyclone primaire, qui comporte une extrémité reliée à l'ouverture de sortie (19) du cyclone primaire (6),
**caractérisé en ce que** l'extrémité inférieure ouverte du cyclone primaire (6) se projette vers le bas dans la zone de lit fluidisé primaire (10) de manière à former une zone de lit fluidisé secondaire (35) à l'intérieur de l'extrémité ouverte inférieure (32) du cyclone primaire (6).

2. Dispositif de dégagement et extracteur intégré (2) suivant la revendication 1, comprenant de plus un moyen secondaire (41) pour injecter dans la zone de lit fluidisé secondaire (35) un gaz pour la fluidisation ou l'extraction de particules solides.

3. Dispositif de dégagement et extracteur intégré (2) suivant l'une ou l'autre des revendications 1 et 2, **caractérisé en ce que** l'entrée (24) du cyclone primaire (6) est une entrée tangentielle (42) agencée dans la paroi latérale (15) à proximité de l'extrémité fermée du cyclone primaire (6).

4. Dispositif de dégagement et extracteur intégré (2) suivant l'une quelconque des revendications 1 à 3, **caractérisé en ce qu**'une partie (44) du premier conduit de sortie (30) s'étend dans le cyclone primaire (6).

5. Dispositif de dégagement et extracteur intégré (2) suivant l'une quelconque des revendications 1 à 4, **caractérisé en ce que** le cyclone primaire (6) comprend de plus un stabiliseur de tourbillon primaire (46) monté coaxialement dans la partie centrale du cyclone primaire (6), le diamètre extérieur du stabiliseur de tourbillon primaire (46) étant égal ou supérieur au diamètre du premier conduit de sortie (30), lequel stabiliseur de tourbillon primaire (46) est positionné en dessous de l'ouverture d'entrée (49) du premier conduit de sortie (30) à une distance qui est égale ou supérieure au diamètre du premier conduit de sortie (30).

6. Dispositif de dégagement et extracteur intégré (2) suivant l'une quelconque des revendications 1 à 5, comprenant de plus :
(a) un cyclone secondaire (55) contenu à l'intérieur du récipient de dégagement (3), lequel cyclone secondaire (55) est fermé à son extrémité supérieure au moyen d'un couvercle (57) pourvu d'une ouverture de sortie (58) et comprend une partie inférieure (60) et une entrée (62) qui est en communication pour un fluide avec le premier conduit de sortie (30); et
(b) un second conduit de sortie (64) formant un parcours d'écoulement depuis l'ouverture de sortie (58) du cyclone secondaire (55).

7. Dispositif de dégagement et extracteur intégré (2) suivant la revendication 6, **caractérisé en ce que** l'entrée (62) du cyclone secondaire (55) est une entrée tangentielle (70) agencée dans la partie supérieure (71) du cyclone secondaire (55).

8. Dispositif de dégagement et extracteur intégré (2) suivant l'une ou l'autre des revendications 6 et 7, **caractérisé en ce qu**'une partie du second conduit de sortie (64) s'étend dans le cyclone secondaire (55).

9. Dispositif de dégagement et extracteur intégré (2) suivant l'une quelconque des revendications 6 à 8, **caractérisé en ce que** le cyclone secondaire (55) comprend de plus un stabiliseur de tourbillon secondaire (74) monté coaxialement dans la partie centrale du cyclone secondaire (55), le diamètre extérieur du stabiliseur de tourbillon secondaire (74) étant égal ou supérieur au diamètre du second conduit de sortie (64), lequel stabiliseur de tourbillon secondaire (74) est positionné en dessous de l'ouverture d'entrée (77) du second conduit de sortie (64) à une distance qui est égale ou supérieure au diamètre du second conduit de sortie (64).

10. Dispositif de dégagement et extracteur intégré (2) suivant l'une quelconque des revendications 6 à 9, comprenant de plus un venturi positionné dans l'extrémité de sortie (84) du premier conduit de sortie (30) au voisinage de l'entrée (62) du cyclone secondaire (55).

11. Dispositif de dégagement et extracteur intégré suivant l'une quelconque des revendications 6 à 10, **caractérisé en ce qu**'il y a un intervalle (82) entre l'extrémité de sortie (83) du premier conduit de sortie (30) et l'entrée (62) du cyclone secondaire (55).

12. Procédé de séparation d'un mélange de particules solides et de vapeur et d'extraction d'un résidu adsorbé et entraîné de particules solides séparées dans un récipient de dégagement (3) comportant un lit fluidisé primaire (10) comprenant :
(a) l'écoulement d'un mélange de particules solides et de vapeur par un conduit de transport (27);
(b) le passage du mélange de particules solides et de vapeur du conduit de transport (27) dans un cyclone primaire vertical (6) comportant une extrémité inférieure ouverte contenu à l'intérieur du récipient de dégagement (3), dans lequel l'extrémité inférieure ouverte du cyclone primaire (6) est immergée dans le lit fluidisé primaire (10);
(c) le contrôle du niveau du lit fluidisé primaire de telle sorte que la surface supérieure du lit fluidisé primaire soit maintenue au-dessus de l'extrémité inférieure ouverte du cyclone primaire, et qu'une partie du lit fluidisé primaire soit contenue à l'intérieur du cyclone primaire à l'extrémité inférieure ouverte, en formant un lit fluidisé secondaire (36);
(d) la séparation du mélange de particules solides et de vapeur en vapeur séparée et particules solides séparées contenant un résidu adsorbé ou entraîné;
(e) la collecte des particules solides séparées dans le lit fluidisé secondaire (36) contenu à l'intérieur du cyclone primaire (6);
(f) l'introduction d'un gaz pour extraire le résidu des particules solides séparées, en formant des vapeurs extraites et des particules solides extraites;
(g) la montée de la vapeur séparée et de la vapeur extraite par le cyclone primaire (6); et
(h) l'écoulement des particules solides extraites de l'extrémité inférieure ouverte du cyclone primaire (6) dans le lit fluidisé primaire (10).

13. Procédé suivant la revendication 12, comprenant de plus l'utilisation du cyclone primaire (6) à une pression légèrement supérieure à celle dans le récipient de dégagement (3), de telle sorte que la surface supérieure (39) du lit fluidisé secondaire (36) soit en dessous de la surface supérieure (40) du lit fluidisé primaire (10).

14. Procédé suivant l'une ou l'autre des revendications 12 et 13, comprenant de plus l'évacuation de la vapeur séparée et de la vapeur extraite pour qu'elles s'élèvent du cyclone primaire (6), l'introduction de la vapeur dans un cyclone secondaire (55), la séparation des particules solides entraînées dans le cyclone secondaire (55) et le déchargement de la vapeur et des particules solides séparément du cyclone secondaire (55).

15. Procédé suivant l'une quelconque des revendications 12 à 14, **caractérisé en ce que** le cyclone secondaire (55) est utilisé à une pression qui est légèrement inférieure à celle dans le cyclone primaire (6).

16. Procédé de réadaptation d'un récipient de dégagement existant (3) comportant une certaine sorte de moyen de séparation à la partie supérieure et une zone de lit fluidisé à la partie inférieure, appelée ci-après zone de lit fluidisé primaire (10), adaptée pour contenir des particules solides fluidisées, et un moyen primaire (12) pour injecter dans la zone de lit fluidisé primaire (10) un gaz pour la fluidisation ou l'extraction de particules solides, **caractérisé en ce que** la réadaptation est réalisée en plaçant un cyclone primaire vertical (6) à l'intérieur du dispositif de dégagement (3), lequel cyclone primaire (6) comporte une paroi latérale cylindrique (15) et est fermé à son extrémité supérieure au moyen d'un couvercle (17) pourvu d'une ouverture de sortie (19) et ouvert à son extrémité inférieure, lequel cyclone primaire (6) est de plus pourvu d'au moins une entrée (24) pour recevoir une suspension de particules solides et de vapeur, et un premier conduit de sortie (30) pour former un parcours d'écoulement depuis l'ouverture de sortie (19) du cyclone primaire, qui comporte une extrémité reliée à l'ouverture de sortie (19) du cyclone primaire (6), dans lequel l'extrémité inférieure ouverte du cyclone primaire (6) se projette vers le bas dans la zone de lit fluidisé primaire (10) de manière à former une zone de lit fluidisé secondaire (35) à l'intérieur de l'extrémité ouverte inférieure (32) du cyclone primaire (6).

17. Procédé de réadaptation suivant la revendication 16, **caractérisé en ce qu**'est présent un moyen secondaire (41) pour injecter dans la zone de lit fluidisé secondaire (35) un gaz pour la fluidisation ou l'extraction de particules solides.

18. Procédé de réadaptation suivant l'une ou l'autre des revendications 16 et 17, **caractérisé en ce que** l'entrée (24) du cyclone primaire (6) est une entrée tangentielle (42) agencée dans la paroi latérale (15) à proximité de l'extrémité fermée du cyclone primaire (6).

19. Procédé de réadaptation suivant l'une quelconque des revendications 16 à 18, **caractérisé en ce qu**'une partie (44) du premier conduit de sortie (30) s'étend dans le cyclone primaire (6).

20. Procédé de réadaptation suivant l'une quelconque des revendications 16 à 19, **caractérisé en ce que** le cyclone primaire (6) comprend de plus un stabiliseur de tourbillon primaire (46) monté coaxialement dans la partie centrale du cyclone primaire (6), le diamètre extérieur du stabiliseur de tourbillon primaire (46) étant égal ou supérieur au diamètre du premier conduit de sortie (30), lequel stabiliseur de tourbillon primaire (46) est positionné en dessous de l'ouverture d'entrée (49) du premier conduit de sortie (30) à une distance qui est égale ou supérieure au diamètre du premier conduit de sortie (30).

21. Procédé de réadaptation suivant l'une quelconque des revendications 16 à 20, **caractérisé en ce que**
(a) un cyclone secondaire (55) est contenu à l'intérieur du récipient de dégagement (3) résultant, lequel cyclone secondaire (55) est fermé à son extrémité supérieure au moyen d'un couvercle (57) pourvu d'une ouverture de sortie (58) et comprend une partie inférieure (60) et une entrée (62) qui est en communication pour un fluide avec le premier conduit de sortie (30); et
(b) un second conduit de sortie (64) formant un parcours d'écoulement depuis l'ouverture de sortie (58) du cyclone secondaire (55).

22. Procédé de réadaptation suivant la revendication 21, **caractérisé en ce que** l'entrée (62) du cyclone secondaire (55) est une entrée tangentielle (70) agencée dans la partie supérieure (71) du cyclone secondaire (55).

23. Procédé de réadaptation suivant l'une ou l'autre des revendications 21 et 22, **caractérisé en ce qu**'une partie du second conduit de sortie (64) s'étend dans le cyclone secondaire (55).

24. Procédé de réadaptation suivant l'une quelconque des revendications 21 à 23, **caractérisé en ce que** le cyclone secondaire (55) comprend de plus un stabiliseur de tourbillon secondaire (74) monté coaxialement dans la partie centrale du cyclone secondaire (55), le diamètre extérieur du stabiliseur de tourbillon secondaire (74) étant égal ou supérieur au diamètre du second conduit de sortie (64), lequel stabiliseur de tourbillon secondaire (74) est positionné en dessous de l'ouverture d'entrée (77) du second conduit de sortie (64) à une distance qui est égale ou suipérieure au diamètre du second conduit de sortie (64).

25. Procédé de réadaptation suivant l'une quelconque des revendications 21 à 24, comprenant de plus un venturi positionné dans l'extrémité de sortie (84) du premier conduit de sortie (30) au voisinage de l'entrée (62) du cyclone secondaire (55).

26. Procédé de réadaptation suivant l'une quelconque des revendications 21 à 25, **caractérisé en ce qu**'il y a un intervalle (82) entre l'extrémité de sortie (83) du premier conduit de sortie (30) et l'entrée (62) du cyclone secondaire (55).

27. Procédé de réadaptation suivant l'une quelconque des revendications 16 à 26, **caractérisé en ce que** le récipient de dégagement est utilisé dans une unité de craquage catalytique fluide, une unité de cokéfaction fluide ou un procédé avec gazéificateur de charbon entraîné.
